# EUROPEAN PATENT SPECIFICATION

(11) **EP 3 896 318 B1**
(45) Date of publication and mention of the grant of the patent: **13.12.2023**
(21) Application number: 21167931.1
(22) Date of filing: 12.04.2021
(51) Int. Cl.: F16K 11/044, E03C 1/04, E03C 1/02

(54) **WATERWAY SLIDE SWITCH DEVICE AND WATER OUTLET DEVICE**
WASSERWEGSCHALTVORRICHTUNG UND WASSERAUSLASSVORRICHTUNG
DISPOSITIF DE COMMUTATION DE SOUPAPE COULISSANTE DE VOIE D'EAU ET DISPOSITIF DE SORTIE D'EAU

(30) Priority: 10.04.2020 CN 202010279488
(43) Date of publication of application: 20.10.2021
(73) Proprietor: Xiamen Solex High-tech Industries Co., Ltd., 361000 Fujian (CN)
(72) Inventor: LIN, Fangqi, Xiamen, 361000 (CN); HU, Lihong, Xiamen, 361000 (CN); CHEN, Wenxing, Xiamen, 361000 (CN)
(74) Representative: Verscht, Thomas Kurt Albert

(56) References cited:
- WO-A1-01/90615
- CN-U- 206 582 359
- DE-A1- 4 141 172
- US-A- 2 939 474
- US-A- 5 163 465
- US-A1- 2018 283 566

## Description

### FIELD OF THE DISCLOSURE

The present disclosure relates to a kitchen and a bathroom, and in particular relates to a waterway slide switch device and a water outlet device.

### BACKGROUND OF THE DISCLOSURE

In existing waterway slide switch devices, for example, Chinese patent application CN110056682A discloses a waterway switch device and a shower, the waterway switch device comprises a housing, a waterway, a movable plug, a dial rod and a water outlet pipe, and the waterway is disposed in the housing and defines an upper water outlet passage, the water outlet pipe is disposed below the waterway and defines a lower water outlet passage, and a water inlet passage is defined between the water outlet pipe and the housing. The housing and the waterway respectively comprises a first hole and a second hole, one end of the dial rod passes through the first hole and the second hole to be connected to the movable plug, and the dial rod drives the movable plug cooperating with the water outlet pipe to move upward and downward so as to enable the water inlet passage to be in communication with one of the upper water outlet passage or the lower water outlet passage. In the shower, the dial rod of the switching device can be directly toggled upward to enable water to flow upward, and the dial rod of the switching device can be directly toggled downward to enable the water to flow downward. In the existing waterway slide switch device, when water pressure is high, a switching process between switching positions is interrupted due to hydraulic power, an operating force is large, a switching is laborious, and the water is even required to be turned off to assist the switching.
With regard to the prior art further attention is drawn to US 2 939 474 A from which a diverter valve is known, which comprises, in combination: a cylindrical housing including an inner cylindrical core body defining an annular space with the inside wall of said housing; a movable cylindrical shaped valve member having an interior flow passage therein and having one end adapted to the telescoped over said core and moved back and forth within said annular space between first and second positions respectively, said valve member being in sealing relationship with said core body and said inside wall of said housing; said core including lateral ports opening into said annular space at points between said first and second pistons, said ports being in communication with said interior flow passage when said valve member is in said first position; and lateral passage means passing from said annular space at a point between said first and second positions to the exterior of said housing, whereby liquid passing into said core is directed out said ports and through said interior flow passage of said valve member when said valve member is in said first position and directed out said ports to said annular space to pass out said lateral passage means when said valve member is in said second position.

### BRIEF SUMMARY OF THE DISCLOSURE

The present disclosure provides a waterway slide switch device and a water outlet device, which overcomes the deficiencies of the waterway slide switch device and the water outlet device in the background.
The present invention relates to a waterway slide switch device as defined in claim 1.
Preferred embodiments are disclosed in the dependent claims.

In order to solve the technical problems, a first technical solution of the present disclosure is as follows.

A waterway slide switch device comprises a valve body member and a sliding member, the valve body member is disposed with a water inlet passage and two water dividing passages, the sliding member is configured to slide relative to the valve body member to enable the two water dividing passages to be switched to be in communication with the water inlet passage due to the sliding; said waterway slide switch device further comprising a pressure component, the pressure component is disposed in the valve body member and cooperates with the two water dividing passages to enable water flowing in the two water dividing passages to be both configured to act on the pressure component to enable the pressure component to be subjected to water force, the sliding member and the pressure component are configured to slide relative to each other, and the valve body member is disposed with a limiting mechanism configured to limit a movement or a movement distance of the pressure component, characterized in that the sliding member comprises a sliding sleeve and a sealing portion secured to an outer side of the sliding sleeve, the sliding sleeve drives the sealing portion to slide to enable the two water dividing passages to be switched to be in communication with the water inlet passage, the sliding sleeve is hermetically and slidably connected to an outer side of the pressure component; the two water dividing passages are a first water dividing passage and a second water dividing passage, the first water dividing passage comprises a sleeve inner portion disposed in the sliding sleeve, water flowing in the sleeve inner portion is configured to act on a first end surface of the pressure component to generate the water force, the second water dividing passage comprises a gap section disposed between the sliding sleeve and the valve body member and a water outlet section in communication with the gap section, water flowing in the water outlet section is configured to act on a second end surface of the pressure component to generate the water force, and wherein inlets of the two water dividing passages are separated and face each other, the water inlet passage comprises a water dividing cavity disposed in the valve body member and disposed between the inlets of the two water dividing passages, the sliding sleeve passes through the water dividing cavity, the sealing portion is disposed in the water dividing cavity, and the inlets of the two water dividing passages is alternatively closed to achieve switching due to the sealing portion.

In an embodiment, the pressure component isolates the two water dividing passages.

In an embodiment, a reset elastic body is disposed between the sliding member and the valve body member.

In an embodiment, the sliding sleeve comprises a water hole penetrating an inner side and an outer side of the sleeve inner portion of the sliding sleeve, and the water outlet section and the sleeve inner portion are respectively disposed on two sides of the pressure component.

In an embodiment, an installation cavity is disposed in the valve body member, the sliding sleeve is slidably connected to an inner side of the installation cavity, a sealing member is disposed between an inner wall of the installation cavity and the sliding sleeve, and the sealing member, the water hole and the pressure component are disposed at intervals along a length of the sliding sleeve.

In an embodiment, the water outlet section is defined in the installation cavity, and the gap section is defined between the inner wall of the installation cavity and a shaft sleeve component.

In an embodiment, the pressure component comprises a protruding portion protruding out of the sliding sleeve and disposed in the water outlet section, the limiting mechanism is disposed on the water outlet section, and the protruding portion cooperates with the limiting mechanism to achieve limiting.

In an embodiment, the protruding portion is disposed with a limiting member, the limiting mechanism comprises a limiting groove extending inward from an inner wall of the water outlet section, the limiting member is disposed in the limiting groove, and the limiting groove cooperates with the limiting member to achieve the limiting.

In an embodiment, an installation cavity is disposed in the valve body member, the sliding sleeve is slidably connected to an inner side of the installation cavity, the water outlet section is defined in the installation cavity, the gap section is defined between the inner wall of the installation cavity and a shaft sleeve component; the valve body member comprises a water inlet penetrating an inner side and an outer side, and the water inlet is in communication with the water dividing cavity.

In an embodiment, the valve body member comprises the shaft sleeve component and a first joint hermetically secured to a first end of the shaft sleeve component, the installation cavity is disposed in the shaft sleeve component, the first joint is in communication with a first port of the shaft sleeve component, the first joint is disposed with a step facing the shaft sleeve component; the protruding portion comprises a limiting member, the pressure component comprises a protruding portion protruding out of the sliding sleeve, the limiting mechanism comprises a limiting groove defined due to a first end surface of the shaft sleeve component being separated from the step of the first joint, the limiting member is disposed in the limiting groove, and the limiting groove cooperates with the limiting member to achieve limiting.

In an embodiment, the valve body member comprises a housing and a second joint, the shaft sleeve portion is secured in the housing, the second joint is secured to a second end of the shaft sleeve component, and the second joint is in communication with a second port of the shaft sleeve component.

In an embodiment, the shaft sleeve component comprises a shaft sleeve and a sealing sleeve, the shaft sleeve and the sealing sleeve are secured in the housing, the shaft sleeve is separated from the sealing sleeve, ports of the shaft sleeve and the sealing sleeve facing to each other define the inlets of the two water dividing passages.

In an embodiment, which comprises an operating member configured to move relative to the valve body member, the valve body member comprises a housing, the shaft sleeve component is secured in the housing, the shaft sleeve component comprises a first through hole penetrating an inner side and an outer side, the housing comprises a second through hole penetrating an inner side and an outer side, the operating member is disposed in the first through hole and the second through hole and is operatively connected to the sliding member to drive the sliding member to slide.

In an embodiment, the valve body member comprises a housing and a shaft sleeve hermetically secured in the housing, the shaft sleeve cooperates with the housing and is disposed with an installation cavity, the sliding sleeve is slidably connected to an inner side of the installation cavity, a sealing member is disposed between an inner wall of the installation cavity and the sliding sleeve, and the sealing member, the water hole and the pressure component are disposed at intervals along a length of the sliding sleeve.

In an embodiment, the valve body member further comprises a second joint, the second joint is secured in the housing, the second joint is in communication with the housing, the housing is disposed with a step facing the second joint; the protruding portion comprises a limiting member, the pressure component comprises a protruding portion protruding out of the sliding sleeve, the limiting mechanism comprises a limiting groove defined due to an inner end surface of the second joint being separated from the step of the housing, the limiting member is disposed in the limiting groove, and the limiting groove cooperates with the limiting member to achieve limiting.

In an embodiment, which further comprises an operating member configured to move relative to the valve body member, the valve body member comprises a giving hole penetrating an inner side and an outer side, and the operating member is disposed in the giving hole and is operatively connected to the sliding member to drive the sliding member to slide.

In order to solve the technical problems, a second technical solution of the present disclosure is as follows.

A waterway slide switch device comprises a valve body member and a sliding member, the valve body member is disposed with a water inlet passage and two water dividing passages, the sliding member is configured to slide relative to the valve body member to enable the two water dividing passages to be switched to be in communication with the water inlet passage due to the sliding; which further comprises a pressure component, the pressure component is disposed in the valve body member and isolates the two water dividing passages, the sliding member and the pressure component are configured to slide relative to each other, and the valve body member is disposed with a limiting mechanism configured to limit a movement or a movement distance of the pressure component.

In order to solve the technical problems, a third technical solution of the present disclosure is as follows.

A water outlet device comprises a faucet body, a control mechanism and the waterway slide switch device, the faucet body is disposed with a front waterway, the control mechanism cooperates with the front waterway to control waterway, and the front waterway is in communication with the water inlet passage of the waterway slide switch device.

Compared with the existing techniques, the technical solution has the following advantages.

The pressure component is disposed in the valve body member and cooperates with the two water dividing passages to enable water flowing in the two water dividing passages to be both configured to act on the pressure component to enable the pressure component to be subjected to water force, water pressure applied to the pressure component is limited due to the limiting mechanism of the valve body member, the sliding member can slide relative to the pressure component, therefore the water force applied to the sliding member is reduced and a labor-saving switching is achieved.

The pressure component is disposed in the valve body member and isolates the two water dividing passages. The water flowing in the two water dividing passages can both act on the pressure component to enable the pressure component to be subjected to the water force, water pressure applied to the pressure component is limited due to the limiting mechanism of the valve body member, the sliding member can slide relative to the pressure component, therefore the water force applied to the sliding member is reduced and a labor-saving switching is achieved.

A reset elastic body is disposed between the sliding member and the valve body member, and the sliding member is driven to be reset due to the reset elastic force and to be reset to an initial state when the water is off.

The sliding sleeve is hermetically and slidably connected to the outer side of the pressure component. The first water dividing passage comprises the sleeve inner portion disposed in the sliding sleeve and the water flowing in the sleeve inner portion can act on the first end surface of the pressure component to generate the water force. The second water dividing passage comprises a gap section disposed between the sliding sleeve and the valve body member and a water outlet section in communication with the gap section, and the water flowing in the water outlet section can act on the second end surface of the pressure component to generate the water force. The structure is simple and compact, the switching is stable and reliable, and a switching force is small.

The sliding sleeve comprises a water hole penetrating the inner side and the outer side of the sleeve inner portion. The water outlet section and the sleeve inner portion of the sliding sleeve are respectively disposed on the two sides of the pressure component. A waterway layout is reasonable, the structure is compact, and which is convenient for connecting an external water outlet mechanism.

The pressure component comprises a protruding portion protruding out of the sliding sleeve and disposed in the water outlet section. The limiting mechanism is disposed on the water outlet section. The protruding portion cooperates with the limiting mechanism to achieve the limiting. The layout is reasonable, the limiting and a waterway switching are not interfered, and the structure is compact.

The limiting groove cooperates with the limiting member to achieve the limiting, the structure is simple, and the limiting is stable and reliable.

The gap disposed between the end face of the sleeve portion and the step of the joint defines the limiting groove, or the gap disposed between the inner end face of the joint and the step of the housing defines the limiting groove. The structure is simple and compact, and which is convenient for connecting the external water outlet mechanism.

The shaft sleeve and the sealing sleeve are both secured in the housing, the shaft sleeve is separated from the sealing sleeve, and the ports of the shaft sleeve and the sealing sleeve facing to each other define the inlets of the two water dividing passages. The structure is simple, an assembly is convenient, and a positioning is accurate.

The valve body member comprises a housing and a shaft sleeve hermetically secured in the housing. The shaft sleeve cooperates with the housing and is disposed with an installation cavity. The sliding sleeve is slidably connected to the inner side of the installation cavity, and the structure is simple.

### BRIEF DESCRIPTION OF THE DRAWINGS

The present disclosure will be further described below in combination with the accompanying drawings and embodiments.
Fig. 1 illustrates a perspective view of a waterway slide switch device of Embodiment 1.
Fig. 2 illustrates an exploded perspective view of the waterway slide switch device of Embodiment 1.
FIG. 3 illustrates a first cross-sectional view of the waterway slide switch device of Embodiment 1 when water flows downward.
FIG. 4 illustrates a second cross-sectional view of the waterway slide switch device of Embodiment 1 when water flows upward.
FIG. 5 illustrates a perspective view of a water outlet device using Embodiment 1.
FIG. 6 illustrates an exploded perspective view of the water outlet device using Embodiment 1.
FIG. 7 illustrates a cross-sectional view of the water outlet device using Embodiment 1.
FIG. 8 illustrates a perspective view of a waterway slide switch device of Embodiment 2.
FIG. 9 illustrates an exploded perspective view of the waterway slide switch device of Embodiment 2.
FIG. 10 illustrates a first cross-sectional view of the waterway slide switch device of Embodiment 2 when water flows downward
FIG. 11 illustrates the second cross-sectional view of the waterway slide switch device of Embodiment 2 when water flows upward.
FIG. 12 illustrates a perspective view of a water outlet device using Embodiment 2.
FIG. 13 illustrates an exploded perspective view of the water outlet device using Embodiment 2.
FIG. 14 illustrates a cross-sectional view of the water outlet device using Embodiment 2.

Reference numbers: waterway slide switch device A, valve body member 1, sliding member 2, pressure component 3, reset elastic body 4, operating member 5, water inlet passage 11, water dividing cavity 111, water inlet 112, first water dividing passage 12, second water dividing passage 12', limiting mechanism 13, limiting groove 131, installation cavity 14, gap section 141, water outlet section 142, sealing member 143, first joint 15, first step 151, first housing 16, second through hole 161, second joint 17, shaft sleeve 18, first through hole 181, outer flange 182, sealing sleeve 19; sliding sleeve 21, sleeve inner portion 211, water hole 212, corresponding slot 213, sealing portion 22; protruding portion 31, limiting member 32; dial rod 51, locking member 52, insertion portion 521; faucet body 6, control mechanism 61, handle 611, hard pipe 62, top shower 621, hose 63, and hand-held shower 631.
waterway slide switch device A', second housing 16', second step 162, outer sleeve 53, inner sleeve 54, insert member 541, and handle 611'.

### DETAILED DESCRIPTION OF THE EMBODIMENTS

### Embodiment 1

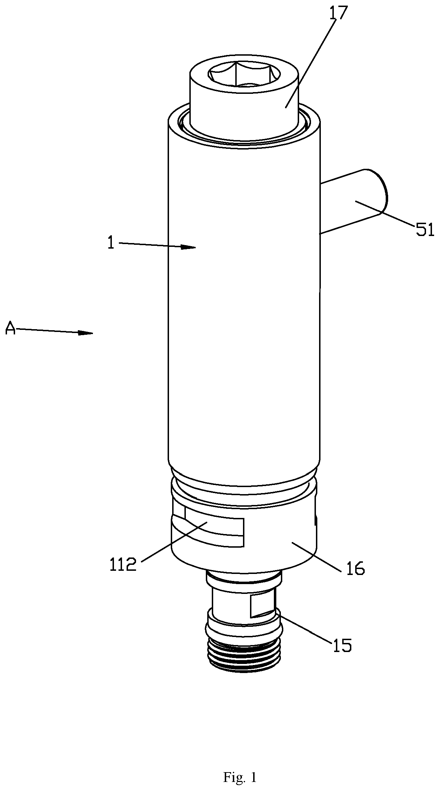

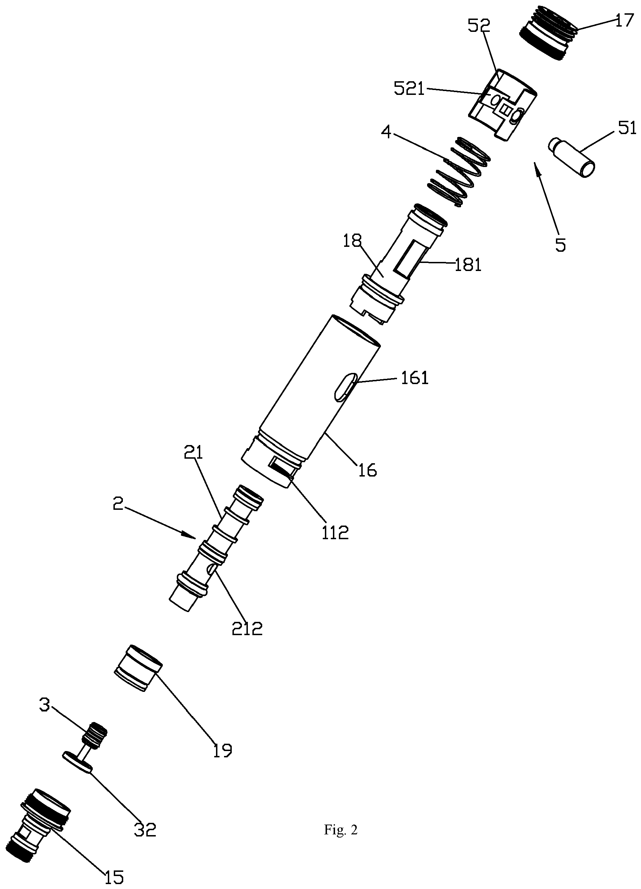

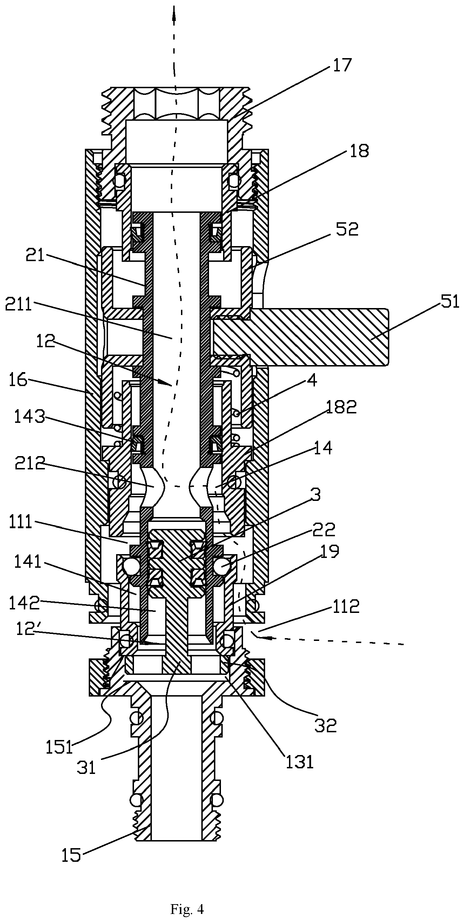

Referring to Figs. 1-4, a dotted line with arrow in drawings indicates a direction of water flow. A waterway slide switch device comprises a valve body member 1, a sliding member 2, a pressure component 3, a reset elastic body 4 and an operating member 5. The valve body member 1 is disposed with a water inlet passage 11 and two water dividing passages 12 and 12', and the sliding member 2 is slidably connected to an inner side of the valve body member 1 to enable the two water dividing passages 12 and 12' to be switched to be in communication with the water inlet passage 11 due to the sliding. The pressure component 3 is disposed in the valve body member 1, the pressure component 3 isolates the two water dividing passages 12 and 12' and cooperates with the two water dividing passages 12 and 12', so that water flow in the two water dividing passages 12 and 12' is configured to act on the pressure component 3 to enable the pressure component 3 be subjected to water force. The sliding member 2 and the pressure component 3 are configured to slide relatively, and the valve body member 1 is disposed with a limiting mechanism 13 configured to limit a movement or a movement distance of the pressure component 3. The limiting mechanism 13 is configured to limit the pressure component 3 to move or to limit the pressure component 3 to only slide within a smaller sliding distance. The smaller sliding distance is relative to a sliding distance of the sliding member 2, for example, a ratio of the two is 1: (5-10). The reset elastic body 4 is disposed between the sliding member 2 or the operating member 5 and the valve body member 1. When a front waterway is off, the reset elastic body 4 enables the waterway slide switch device A to be automatically reset to an initial state. The operating member 5 is operatively connected to the sliding member 2 to drive the sliding member 2 to slide, for example, the drawings illustrates an upward and downward sliding.

An installation cavity 14 is disposed in the valve body member 1. The sliding member 2 comprises a sliding sleeve 21 and a sealing portion 22 secured to an outer side of the sliding sleeve 21, and the sealing portion 22 is, for example, a sealing ring. The sliding sleeve 21 is slidably connected to an inner side of the installation cavity 14, for example, the drawings illustrates an upward and downward sliding. The sliding sleeve 21 drives the sealing portion 22 to slide to the two water dividing passages 12 and 12' to be switched to be in communication with the water inlet passage 11. The sliding sleeve 21 is hermetically and slidably connected to an outer side of the pressure component 3. The two water dividing passages 12 and 12' are respectively a first water dividing passage 12 and a second water dividing passage 12'. The first water dividing passage 12 comprises a sleeve inner portion 211 disposed in the sliding sleeve 21 and water flowing in the sleeve inner portion 211 is configured to act on a first end surface of the pressure component 3 to generate the water force, for example, referring to the drawings, the water flowing in the sleeve inner portion 211 is configured to act on an upper end surface of the pressure component 3. The second water dividing passage 12' comprises a gap section 141 disposed between the sliding sleeve 21 and the valve body member 1 and a water outlet section 142 in communication with the gap section 141, referring to the drawings, the gap section 141 is defined between an inner wall of the installation cavity 14 and a shaft sleeve component. An area of the installation cavity 14 disposed below the pressure component 3 defines the water outlet section 142. Water flowing in the water outlet section 142 is configured to act on a lower end surface (i.e., a second end surface) of the pressure component 3 to generate water force. The first end surface and the second end surface of the pressure component 3 are opposite. The water outlet section 142 and the sleeve inner portion 211 are respectively disposed on two sides of the pressure component 3. The sliding sleeve 21 comprises a water hole 212 penetrating an inner side and an outer side of the sleeve inner portion 211 of the sliding sleeve. A sealing member 143 is disposed between the inner wall of the installation cavity 14 and the sliding sleeve 21. The sealing member, the water hole and the pressure component are disposed at intervals along a length of the sliding sleeve. Moreover, as the pressure component 3 does not slide or a sliding distance of the pressure component 3 is short, the pressure component 3 will not block the water hole 212.

Inlets of the two water dividing passages 12 and 12' are separated and face each other. The water inlet passage 11 comprises a water dividing cavity 111 disposed in the valve body member 1 and disposed between the inlets of the two water dividing passages 12 and 12'. An area of the installation cavity 14 disposed between the inlets of the two water dividing passages 12 and 12' defines the water dividing cavity. The sliding sleeve 21 passes through the water dividing cavity 111 and the sealing portion 22 is disposed in the water dividing cavity 111. The sealing portion is configured to alternatively seal the inlets of the two water dividing passages to achieve switching. The valve body member 1 comprises a water inlet 112 penetrating an inner side and an outer side of the installation cavity 14, the water inlet 112 is in communication with the water dividing cavity 111, and the water inlet passage comprises the water inlet and the water dividing cavity.

The pressure component 3 comprises a mating portion hermetically and slidably connected to an inner side of the sliding sleeve 21 and a protruding portion 31 secured to the mating portion. The protruding portion 31 comprises a protruding rod, and the protruding rod protrudes out of the sliding sleeve 21 and is disposed in the water outlet section 142. The protruding portion 31 further comprises a limiting member 32, the limiting member 32 is, for example, a circular ring, the circular ring surrounds the protruding rod and is secured to an end of the protruding rod by spokes, a passage configured to enable water to flow through is defined between adjacent spokes. The limiting mechanism 13 comprises a limiting groove 131 extending inward from an inner wall of the water outlet section 142, and the circular ring is disposed in the limiting groove 131, and the limiting groove cooperates with the limiting member to achieve limiting.

The valve body member 1 comprises the shaft sleeve component, a first joint 15, a first housing 16 and a second joint 17. The shaft sleeve component comprises a shaft sleeve 18 and a sealing sleeve 19. The shaft sleeve 18 and the sealing sleeve 19 are secured in the first housing 16 and cooperate to define the installation cavity 14. The shaft sleeve is separated from the sealing sleeve up and down, ports of the shaft sleeve and the sealing sleeve facing each other define the inlets of the two water dividing passages, and the separated area defines the water dividing cavity 111. The first joint 15 is secured in a lower port of the first housing 16 to enable the first joint 15 to be relatively secured to and be in communication with a lower end of the sealing sleeve 19. The second joint 17 is secured to an upper port of the first housing 16 to enable the second joint 17 to be relatively secured to and be in communication with an upper end of the shaft sleeve 18. The first housing 16 comprises the water inlet 112 penetrating the inner side and the outer side and configured to guide the water to flow into the water dividing cavity 111. The first joint 15 is disposed with a first step 151 facing the sealing sleeve 19. A first end surface of the sealing sleeve 19 is separated from and faces the first step of the first joint to define the limiting groove.

The shaft sleeve 18 comprises a first through hole 181 penetrating an inner side and an outer side, and the first housing 16 comprises a second through hole 161 penetrating an inner side and an outer side. The operating member 5 is disposed in the first through hole 181 and the second through hole 161 and is secured to the sliding sleeve 21 to drive the sliding member to slide. The sealing member 143 is disposed between the first through hole 181 and the water hole 212 to prevent water from the water hole 212 from flowing into the first through hole 181. Further, the operating member 5 comprises a dial rod 51 and a locking member 52. The dial rod 51 is secured to the sliding sleeve 21 through the locking member 52. The locking member 52 comprises an arc-shaped sleeve. An opening of an inner wall of the arc-shaped sleeve protrude to define an insertion portions 521, the sliding sleeve 21 is disposed with a corresponding slot 213, the insertion portions are disposed in the corresponding slot, and the dial rod 51 is locked to the arc-shaped sleeve. The reset elastic body 4 is, for example, a spring, the spring surrounds the sliding sleeve 21 and abuts the locking member 52 and an outer flange 182 protruding from an outer side of the shaft sleeve 18. In this embodiment, the reset elastic body is disposed between the operating member and the valve body member 1, and as required, can also be directly disposed between the sliding member and the valve body member.

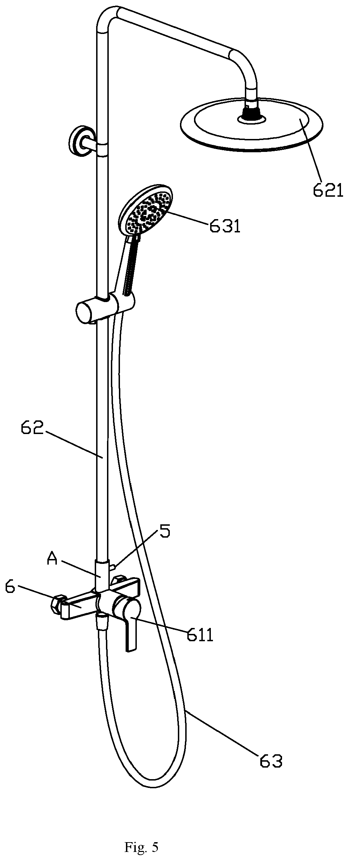

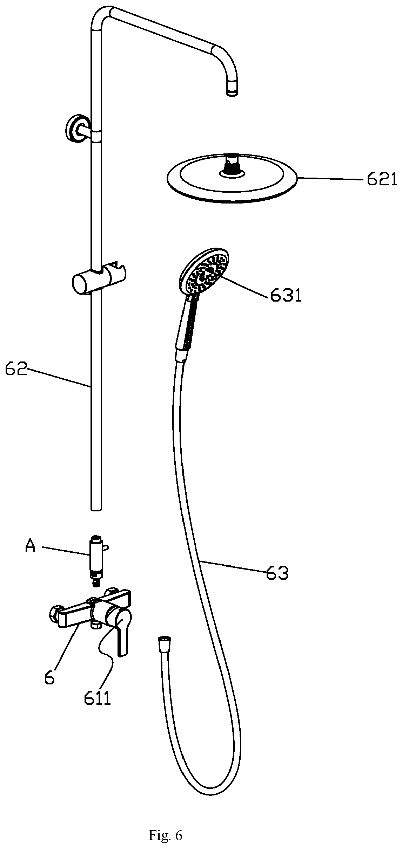

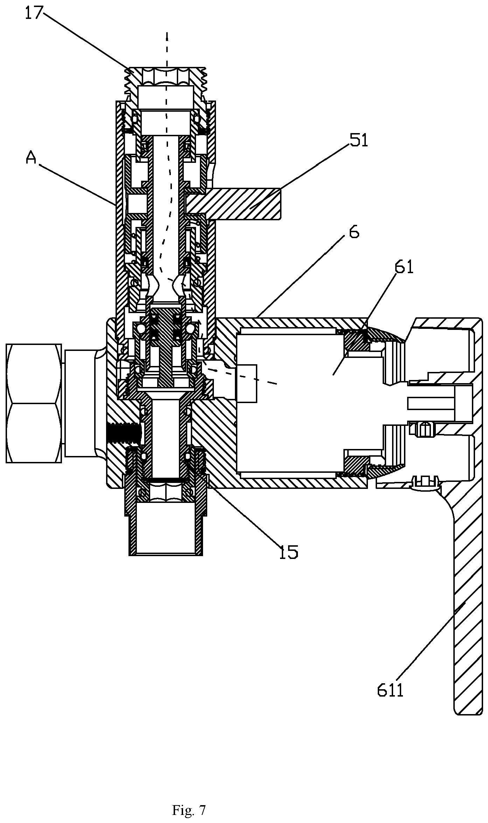

Referring to Figs. 5 to 7, a dotted line with arrow indicates a direction of water flow. A water outlet device comprises a faucet body 6, a control mechanism 61 and the waterway slide switch device A. The faucet body 6 is disposed with the front waterway. The control mechanism 61 cooperates with the front waterway to control waterway. The front waterway comprises a cold-water passage, a hot water passage and a mixed water passage. The control mechanism 61 is, for example, a control mechanism configured to adjust water temperature, flow rate and on-off action. The water temperature, the flow rate and the on-off action can be controlled by a handle 611 of the control mechanism 61. The control mechanism is existing techniques. The control mechanism is disposed on a middle portion of the faucet body 6, and the handle is disposed in front of the middle portion of the faucet body 6. The waterway slide switch device A is disposed in the faucet body 6, the front waterway is in communication with the water inlet passage 11 of the waterway slide switch device A, and an upper portion of the valve body member 1 extends out of an upper side of the faucet body 6. The first water dividing passage of the waterway slide switch device A is connected to a hard pipe 62 of the faucet body 6 through the second joint, an end of the hard pipe 62 is connected to a top shower 621. The second water dividing passage is connected to a hose 63 through the first joint. An end of the hose 63 is connected to a hand-held shower 631. The operating member 5 is disposed above the faucet body 6. An appearance of the water outlet device of this embodiment can be simplified to be consistent with an appearance of a lower support pipe, and the appearance is simple and beautiful.

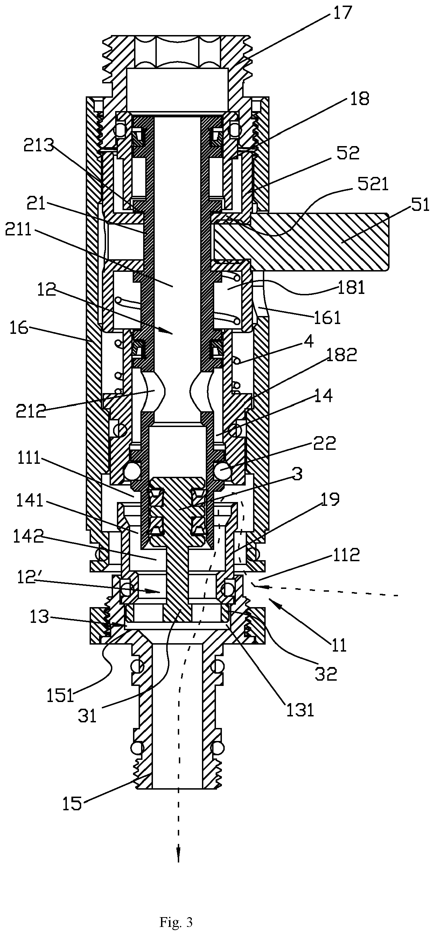

In an initial water outlet state of the water outlet device, referring to Fig. 3, when the control mechanism is opened, water flows along a side of the waterway slide switch device, and the sealing portion of the sliding sleeve 21 blocks a water dividing hole of an upper water dividing passage (an upper water outlet sealing surface) of the shaft sleeve due to the sliding sleeve 21 being subjected to an elastic force of the reset elastic body. At this time, a water outlet of the top shower is closed. The water flows through an inner cavity of the sealing sleeve and flows out of the hand-held shower. The water is closed and a reset: when the water flows out of the top shower, the control mechanism of the faucet body is closed, and water stops to flow out of the faucet. Water pressure applied to the sealing portion of the sliding sleeve 21 disappears, the sliding sleeve 21 moves upward due to the elastic force of the reset elastic body to block the water dividing hole of the upper water dividing passage of the shaft sleeve, a water dividing hole of a lower water dividing passage of the sealing sleeve is open, and a default state that the water flows of the hand-held shower is reset. When the water flows out of the hand-held shower, when the water is off, the sliding sleeve 21 is maintained in this position due to the elastic force of the reset elastic body and is maintained in the initial state. During a switching process, the dial rod slides, the dial rod drives the sliding sleeve 21 to slide, and the sealing portion is switched to block the upper water dividing passage and lower water dividing passage. Further, in the switching process, an operating force should overcome a water pressure applied to the sliding sleeve 21 and the sealing portion. As a middle portion of the sliding sleeve 21 comprises a through hole, the through hole is disposed with the pressure component, the water pressure applied to the pressure component is limited by the limiting mechanism of the valve body member, and the sliding sleeve is configured to slide relative to the pressure component. Therefore, the water pressure applied to the pressure component is not applied on the sliding sleeve 21, an area of the sliding sleeve 21 subjected to the water pressure is greatly reduced. At this time, the water pressure is smaller, and the switching is achieved in a labor-saving way.

### Embodiment 2

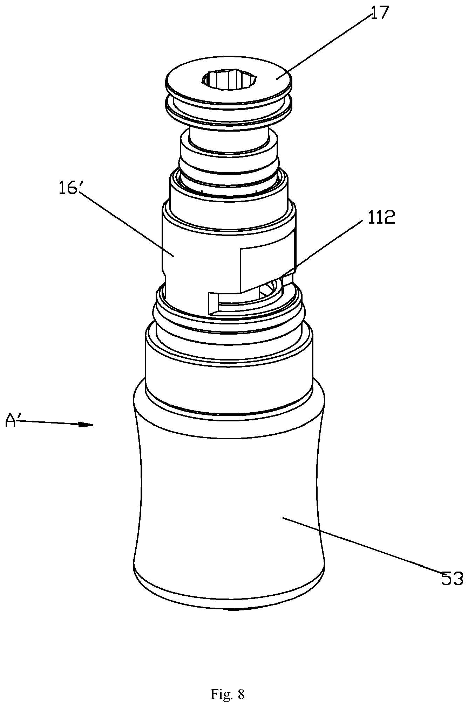

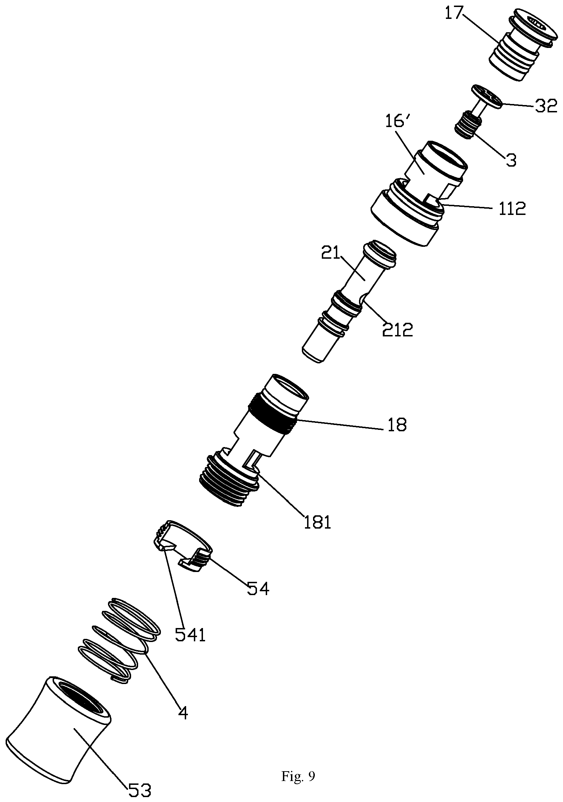

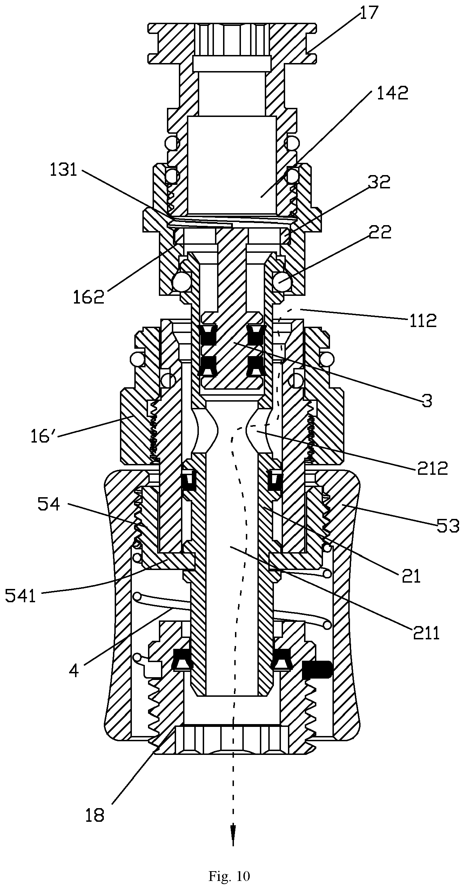

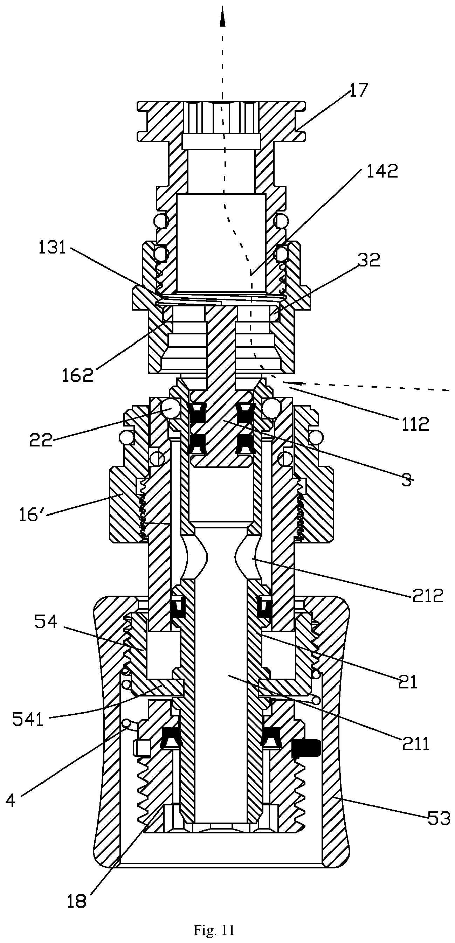

Referring to Figs. 8-11, a dotted line with arrow in drawings indicates a direction of water flow. This embodiment differs from Embodiment 1 in that: the valve body member 1 of the waterway slide switch device A' comprises a second housing 16' and a shaft sleeve 18 hermetically secured in the second housing 16'. A lower section of the second housing 16' is hermetically secured to an upper section of the shaft sleeve 18, and the shaft sleeve 18 cooperates with the second housing 16' and is disposed with the installation cavity 14. The second joint 17 is secured in the second housing 16' and the second joint is in communication with the second housing. The second housing 16' is disposed with a second step 162 facing the second joint. A lower end surface of the second joint is separated from the second step of the second housing to define a limiting groove. The first water dividing passage 12 comprises the sleeve inner portion 211 disposed in the sliding sleeve 21, and the water flow in the sleeve inner portion 211 is configured to act on the first end surface of the pressure component 3 to generate the water force, referring to the drawings, the water flowing in the sleeve inner portion 211 is configured to act on a lower end surface of the pressure component 3. The second water dividing passage 12' comprises a gap section 141 disposed between the sliding sleeve 21 and the second housing and a water outlet section 142 in communication with the gap section 141. Referring to the drawings, the gap section 141 is defined between an inner wall of the second housing 16' and the shaft sleeve component. An area of the installation cavity 14 disposed above the pressure component 3 defines the water outlet section 142, and the water flowing in the water outlet section 142 is configured to act on an upper end surface of the pressure component 3 to generate the water force.

The operating member 5 comprises an outer sleeve 53 and an inner sleeve 54 secured in the outer sleeve. The inner sleeve surrounds an outer side of the shaft sleeve. The inner sleeve 54 protrudes to define an insert member 541, and the insert member 541 passes through the first through hole and is locked to the sliding sleeve 21. The elastic body 5 surrounds the sliding sleeve, and the elastic body 4 is disposed between and abuts the operating member 5 and the first joint.

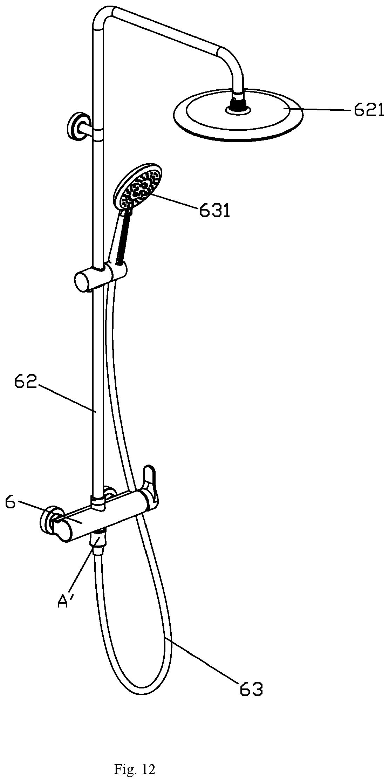

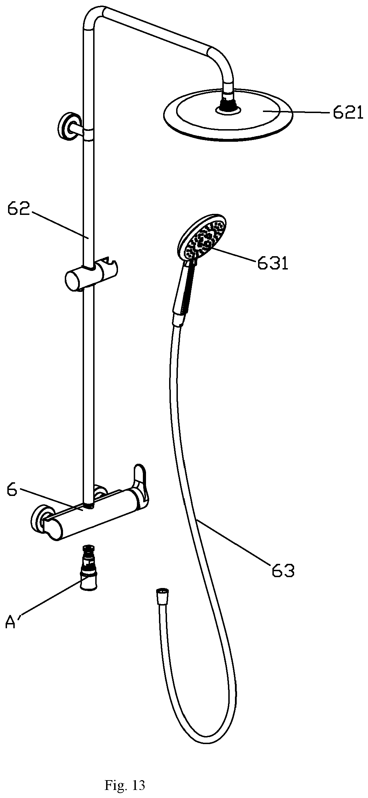

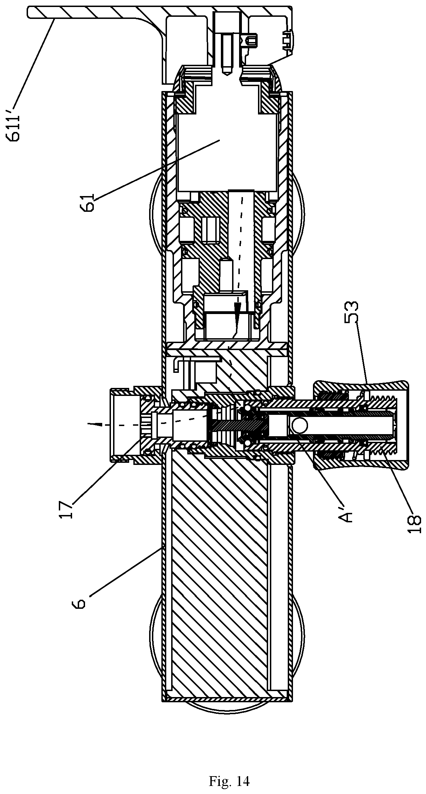

Referring to Figs. 12-14, a dotted line with arrow in the drawings indicates the direction of the water flow. A water outlet device comprises a faucet body 6, a control mechanism 61 and a waterway slide switch device A'. The faucet body 6 is disposed with the front waterway, and the control mechanism cooperates with the front waterway to control waterway. The control mechanism is disposed on a middle portion of the faucet body 6, and a handle 611' of the control mechanism is disposed at a side end of the faucet body 6. The waterway slide switch device A' is disposed in the faucet body 6, and the front waterway is in communication with the water inlet passage 11 of the waterway slide switch device. The first water dividing passage of the waterway slide switch device is in communication with a hose 63 through a lower port of a valve shaft, an end of the hose 63 is connected to a hand-held shower 631. The second water dividing passage is secured to a hard pipe 62 of the faucet body 6 by the second joint, and an end of the hard pipe 62 is connected to a top shower 621. The operating member 5 is disposed below the faucet body 6. An appearance of the water outlet device of this embodiment is simplified to be consist with a lower support pipe, and the appearance is simple and beautiful.

The invention may be summarized as follows: The present disclosure discloses a waterway slide switch device and a water outlet device. The waterway slide switch device comprises a valve body member and a sliding member, the valve body member is disposed with a water inlet passage and two water dividing passages, the sliding member is configured to slide relative to the valve body member to enable the two water dividing passages to be switched to be in communication with the water inlet passage due to the sliding; further comprises a pressure component, the pressure component is disposed in the valve body member and cooperates with the two water dividing passages to enable water flowing in the two water dividing passages to be both configured to act on the pressure component to enable the pressure component to be subjected to water force, the sliding member and the pressure component are configured to slide relative to each other, and the valve body member is disposed with a limiting mechanism configured to limit a movement or a movement distance of the pressure component. It has following advantages: the water force applied to the sliding member is reduced and a labor-saving switching is achieved.

## Claims

1. A waterway slide switch device comprises a valve body member (1) and a sliding member (2), the valve body member (1) is disposed with a water inlet passage (11) and two water dividing passages (12, 12'), the sliding member (2) is configured to slide relative to the valve body member (1) to enable the two water dividing passages (12, 12') to be switched to be in communication with the water inlet passage (11) due to the sliding; said waterway slide switch device further comprising a pressure component (3), the pressure component (3) is disposed in the valve body member (1) and cooperates with the two water dividing passages (12, 12') to enable water flowing in the two water dividing passages (12, 12') to be both configured to act on the pressure component (3) to enable the pressure component (3) to be subjected to water force, the sliding member (2) and the pressure component (3) are configured to slide relative to each other, and the valve body member (1) is disposed with a limiting mechanism (13) configured to limit a movement or a movement distance of the pressure component (3), **characterized in that**,
the sliding member (2) comprises a sliding sleeve (21) and a sealing portion (22) secured to an outer side of the sliding sleeve (21), the sliding sleeve (21) drives the sealing portion (22) to slide to enable the two water dividing passages (12, 12') to be switched to be in communication with the water inlet passage (11), the sliding sleeve (21) is hermetically and slidably connected to an outer side of the pressure component (3); the two water dividing passages (12, 12') are a first water dividing passage (12) and a second water dividing passage (12'), the first water dividing passage (12) comprises a sleeve inner portion (211) disposed in the sliding sleeve (21), water flowing in the sleeve inner portion (211) is configured to act on a first end surface of the pressure component (3) to generate the water force, the second water dividing passage (12') comprises a gap section (141) disposed between the sliding sleeve (21) and the valve body member (1) and a water outlet section (142) in communication with the gap section (141), water flowing in the water outlet section (142) is configured to act on a second end surface of the pressure component (3) to generate the water force, and wherein
inlets of the two water dividing passages (12, 12') are separated and face each other, the water inlet passage (11) comprises a water dividing cavity (111) disposed in the valve body member (1) and disposed between the inlets of the two water dividing passages (12, 12'), the sliding sleeve (21) passes through the water dividing cavity (111), the sealing portion (22) is disposed in the water dividing cavity (111), and the inlets of the two water dividing passages (12, 12') is alternatively closed to achieve switching due to the sealing portion (22).

2. The waterway slide switch device according to claim 1, **characterized in that**: the pressure component (3) isolates the two water dividing passages (12, 12').

3. The waterway slide switch device according to claim 1 and/or 2, **characterized in that**: a reset elastic body (4) is disposed between the sliding member (2) and the valve body member (1).

4. The waterway slide switch device according to claim 1, **characterized in that**: the sliding sleeve (21) comprises a water hole (212) penetrating an inner side and an outer side of the sleeve inner portion (211) of the sliding sleeve (21), and the water outlet section (142) and the sleeve inner portion (211) are respectively disposed on two sides of the pressure component (3).

5. The waterway slide switch device according to claim 4, **characterized in that**: an installation cavity (14) is disposed in the valve body member (1), the sliding sleeve (21) is slidably connected to an inner side of the installation cavity (14), a sealing member (143) is disposed between an inner wall of the installation cavity (14) and the sliding sleeve (21), and the sealing member (143), the water hole (212) and the pressure component (3) are disposed at intervals along a length of the sliding sleeve (21).

6. The waterway slide switch device according to claim 5, **characterized in that**: the water outlet section (142) is defined in the installation cavity (14), and the gap section (141) is defined between the inner wall of the installation cavity (14) and a shaft sleeve component.

7. The waterway slide switch device according to any one or more of claims 1 to 6, **characterized in that**: the pressure component (3) comprises a protruding portion (31) protruding out of the sliding sleeve (21) and disposed in the water outlet section (142), the limiting mechanism (13) is disposed on the water outlet section (142), and the protruding portion (31) cooperates with the limiting mechanism (13) to achieve limiting.

8. The waterway slide switch device according to claim 7, **characterized in that**: the protruding portion (31) is disposed with a limiting member (32), the limiting mechanism (13) comprises a limiting groove (131) extending inward from an inner wall of the water outlet section (142), the limiting member (32) is disposed in the limiting groove (131), and the limiting groove (131) cooperates with the limiting member (32) to achieve the limiting.

9. The waterway slide switch device according to claim 1, **characterized in that**: an installation cavity (14) is disposed in the valve body member (1), the sliding sleeve (21) is slidably connected to an inner side of the installation cavity (14), the water outlet section (142) is defined in the installation cavity (14), the gap section (141) is defined between the inner wall of the installation cavity (14) and a shaft sleeve component; the valve body member (1) comprises a water inlet penetrating an inner side and an outer side, and the water inlet is in communication with the water dividing cavity (111).

10. The waterway slide switch device according to any one or more of claims 6 to 9, **characterized in that**: the valve body member (1) comprises the shaft sleeve component and a first joint (15) hermetically secured to a first end of the shaft sleeve component, the installation cavity (14) is disposed in the shaft sleeve component, the first joint (15) is in communication with a first port of the shaft sleeve component, the first joint (15) is disposed with a step facing the shaft sleeve component; the protruding portion (31) comprises a limiting member (32), the pressure component (3) comprises a protruding portion (31) protruding out of the sliding sleeve (21), the limiting mechanism (13) comprises a limiting groove (131) defined due to a first end surface of the shaft sleeve component being separated from the step of the first joint (15), the limiting member (32) is disposed in the limiting groove (131), and the limiting groove (131) cooperates with the limiting member (32) to achieve limiting.

11. The waterway slide switch device according to claim 10, **characterized in that**: the valve body member comprises a housing and a second joint, the shaft sleeve portion is secured in the housing, the second joint is secured to a second end of the shaft sleeve component, and the second joint is in communication with a second port of the shaft sleeve component.

12. The waterway slide switch device according to claim 11, **characterized in that**: the shaft sleeve component comprises a shaft sleeve and a sealing sleeve, the shaft sleeve and the sealing sleeve are secured in the housing, the shaft sleeve is separated from the sealing sleeve, ports of the shaft sleeve and the sealing sleeve facing to each other define the inlets of the two water dividing passages.

13. The waterway slide switch device according to any one or more of claims 6 to 10, further comprising an operating member (5) configured to move relative to the valve body member (1), the valve body member (1) comprises a housing, the shaft sleeve component is secured in the housing, the shaft sleeve component comprises a first through hole (181) penetrating an inner side and an outer side, the housing comprises a second through hole (161) penetrating an inner side and an outer side, the operating member (5) is disposed in the first through hole (181) and the second through hole (161) and is operatively connected to the sliding member (2) to drive the sliding member (2) to slide.

14. The waterway slide switch device according to any one or more of claims 1 to 13, **characterized in that**: the valve body member (1) comprises a housing and a shaft sleeve (18) hermetically secured in the housing, the shaft sleeve (18) cooperates with the housing and is disposed with an installation cavity (14), the sliding sleeve (21) is slidably connected to an inner side of the installation cavity (14), a sealing member (143) is disposed between an inner wall of the installation cavity (14) and the sliding sleeve (21), and the sealing member (143), the water hole (212) and the pressure component (3) are disposed at intervals along a length of the sliding sleeve (21).

15. The waterway slide switch device according to claim 11 **characterized in that**:
the second joint is secured in the housing, the second joint is in communication with the housing, the housing is disposed with a step facing the second joint; the protruding portion comprises a limiting member, the pressure component comprises a protruding portion protruding out of the sliding sleeve, the limiting mechanism comprises a limiting groove defined due to an inner end surface of the second joint being separated from the step of the housing, the limiting member is disposed in the limiting groove, and the limiting groove cooperates with the limiting member to achieve limiting.

16. A water outlet device comprises a faucet body (6) and a control mechanism, further comprising the waterway slide switch device according to any one or more of claims 1 to 15, the faucet body (6) is disposed with a front waterway, the control mechanism (61) cooperates with the front waterway to control waterway, and the front waterway is in communication with the water inlet passage (11) of the waterway slide switch device.

## Patentansprüche

1. Eine Wasserweggleitschalteinrichtung, welche ein Ventilkörperglied (1) und ein Gleitglied (2) aufweist, das Ventilkörperglied (1) ist mit einem Wassereinlassdurchgang (11) und zwei Wasserteilungsdurchgängen (12, 12') angeordnet, das Gleitglied (2) ist konfiguriert, um relativ zum Ventilkörperglied (1) zu gleiten, um den zwei Wasserteilungsdurchgängen (12, 12') zu ermöglichen, geschaltet zu werden, um mit dem Wassereinlassdurchgang (11) aufgrund des Gleitens in Verbindung zu stehen; wobei die Wasserweggleitschalteinrichtung ferner eine Druckkomponente (3) aufweist, die Druckkomponente (3) ist im Ventilkörperglied (1) angeordnet und arbeitet mit den zwei Wasserteilungsdurchgängen (12, 12') zusammen, um in den zwei Wasserteilungsdurchgängen (12, 12') strömendem Wasser zu ermöglichen, beide konfiguriert zu sein, um auf die Druckkomponente (3) zu wirken, um der Druckkomponente (3) zu ermöglichen, einer Wasserkraft ausgesetzt zu sein, das Gleitglied (2) und die Druckkomponente (3) sind konfiguriert, um relativ zueinander zu gleiten, und das Ventilkörperglied (1) ist mit einem Begrenzungsmechanismus (13) angeordnet, der konfiguriert ist, um eine Bewegung oder eine Bewegungsdistanz der Druckkomponente (3) zu begrenzen, **dadurch gekennzeichnet, dass**
das Gleitglied (2) eine Gleithülse (21) und einen Dichtungsteil (22) aufweist, der an einer Außenseite der Gleithülse (21) befestigt ist, die Gleithülse (21) den Dichtungsteil (22) zum Gleiten antreibt, um den zwei Wasserteilungsdurchgängen (12, 12') zu ermöglichen, geschaltet zu werden, um mit dem Wassereinlassdurchgang (11) in Verbindung zu stehen, die Gleithülse (21) hermetisch und gleitbar mit einer Außenseite der Druckkomponente (3) verbunden ist; die zwei Wasserteilungsdurchgänge (12, 12') ein erster Wasserteilungsdurchgang (12) und ein zweiter Wasserteilungsdurchgang (12') sind, der erste Wasserteilungsdurchgang (12) einen Hülseninnenteil (211) aufweist, der in der Gleithülse (21) angeordnet ist, im Hülseninnenteil (211) strömendes Wasser konfiguriert ist, um auf eine erste Endoberfläche der Druckkomponente (3) zu wirken, um die Wasserkraft zu erzeugen, der zweite Wasserteilungsdurchgang (12') einen Spaltabschnitt (141), der zwischen der Gleithülse (21) und dem Ventilkörperglied (1) angeordnet ist, und einen Wasserauslassabschnitt (142), der mit dem Spaltabschnitt (141) in Verbindung steht, aufweist, wobei im Wasserauslassabschnitt (142) strömendes Wasser konfiguriert ist, um auf eine zweite Endoberfläche der Druckkomponente (3) zu wirken, um die Wasserkraft zu erzeugen, und wobei
Einlässe der zwei Wasserteilungsdurchgänge (12, 12') getrennt sind und zueinander hinweisen, der Wassereinlassdurchgang (11) einen Wasserteilungshohlraum (111) aufweist, der im Ventilkörperglied (1) angeordnet ist und zwischen den Einlässen der zwei Wasserteilungsdurchgänge (12, 12') angeordnet ist, die Gleithülse (21) durch den Wasserteilungshohlraum (111) durchgeht, der Dichtungsteil (22) in dem Wasserteilungshohlraum (111) angeordnet ist, und die Einlässe der zwei Wasserteilungsdurchgänge (12, 12') alternativ geschlossen sind, um ein Schalten aufgrund des Dichtungsteils (22) zu erreichen.

2. Die Wasserweggleitschalteinrichtung nach Anspruch 1, **dadurch gekennzeichnet, dass**: die Druckkomponente (3) die zwei Wasserteilungsdurchgänge (12, 12') isoliert.

3. Die Wasserweggleitschalteinrichtung nach Anspruch 1 und/oder 2, **dadurch gekennzeichnet, dass**: ein elastischer Rückstellkörper (4) zwischen dem Gleitglied (2) und dem Ventilkörperglied (1) angeordnet ist.

4. Die Wasserweggleitschalteinrichtung nach Anspruch 1, **dadurch gekennzeichnet, dass**: die Gleithülse (21) ein Wasserloch (212) aufweist, das eine Innenseite und eine Außenseite des Hülseninnenteils (211) der Gleithülse (21) durchdringt, und der Wasserauslassabschnitt (142) und der Hülseninnenteil (211) jeweils auf zwei Seiten der Druckkomponente (3) angeordnet sind.

5. Die Wasserweggleitschalteinrichtung nach Anspruch 4, **dadurch gekennzeichnet, dass**: ein Installationshohlraum (14) im Ventilkörperglied (1) angeordnet ist, die Gleithülse (21) gleitbar mit einer Innenseite des Installationshohlraums (14) verbunden ist, ein Dichtungsglied (143) zwischen einer Innenwand des Installationshohlraums (14) und der Gleithülse (21) angeordnet ist, und das Dichtungsglied (143), das Wasserloch (212) und die Druckkomponente (3) in Abständen entlang einer Länge der Gleithülse (21) angeordnet sind.

6. Die Wasserweggleitschalteinrichtung nach Anspruch 5, **dadurch gekennzeichnet, dass**: der Wasserauslassabschnitt (142) in dem Installationshohlraum (14) definiert ist, und der Spaltabschnitt (141) zwischen der Innenwand des Installationshohlraums (14) und einer Schafthülsenkomponente definiert ist.

7. Die Wasserweggleitschalteinrichtung nach einem oder mehreren der Ansprüche 1 bis 6, **dadurch gekennzeichnet, dass**: die Druckkomponente (3) einen hervorstehenden Teil (31) aufweist, der aus der Gleithülse (21) heraus hervorsteht und in dem Wasserauslassabschnitt (142) angeordnet ist, der Begrenzungsmechanismus (13) an dem Wasserauslassabschnitt (142) angeordnet ist, und der hervorstehende Teil (31) mit dem Begrenzungsmechanismus (13) zusammenarbeitet, um eine Begrenzung zu erreichen.

8. Die Wasserweggleitschalteinrichtung nach Anspruch 7, **dadurch gekennzeichnet, dass**: der hervorstehende Teil (31) mit einem Begrenzungsglied (32) angeordnet ist, der Begrenzungsmechanismus (13) eine Begrenzungsnut (131) aufweist, die sich von einer Innenwand des Wasserauslassabschnitts (142) nach innen erstreckt, das Begrenzungsglied (32) in der Begrenzungsnut (131) angeordnet ist, und die Begrenzungsnut (131) mit dem Begrenzungsglied (32) zusammenarbeitet, um die Begrenzung zu erreichen.

9. Die Wasserweggleitschalteinrichtung nach Anspruch 1, **dadurch gekennzeichnet, dass**: ein Installationshohlraum (14) im Ventilkörperglied (1) angeordnet ist, die Gleithülse (21) gleitbar mit einer Innenseite des Installationshohlraums (14) verbunden ist, der Wasserauslassabschnitt (142) in dem Installationshohlraum (14) definiert ist, der Spaltabschnitt (141) zwischen der Innenwand des Installationshohlraums (14) und einer Schafthülsenkomponente definiert ist; das Ventilkörperglied (1) einen Wassereinlass aufweist, der eine Innenseite und eine Außenseite durchdringt, und der Wassereinlass mit dem Wasserteilungshohlraum (111) in Verbindung steht.

10. Die Wasserweggleitschalteinrichtung nach einem oder mehreren der Ansprüche 6 bis 9, **dadurch gekennzeichnet, dass**: das Ventilkörperglied (1) die Schafthülsenkomponente und eine erste Verbindung (15), das hermetisch an einem ersten Ende der Schafthülsenkomponente befestigt ist, aufweist, der Installationshohlraum (14) in der Schafthülsenkomponente angeordnet ist, die erste Verbindung (15) mit einem ersten Anschluss der Schafthülsenkomponente in Verbindung steht, die erste Verbindung mit einer Stufe, die zu der Schafthülsenkomponente hinweist, angeordnet ist; der hervorstehende Teil (31) ein Begrenzungsglied (32) aufweist, die Druckkomponente (3) einen hervorstehenden Teil (31) aufweist, der aus der Gleithülse (21) heraus hervorsteht, der Begrenzungsmechanismus (13) eine Begrenzungsnut (131) aufweist, die dadurch definiert ist, dass eine erste Endoberfläche der Schafthülsenkomponente von der Stufe der ersten Verbindung (15) getrennt ist, das Begrenzungsglied (32) in der Begrenzungsnut (131) angeordnet ist, und die Begrenzungsnut (131) mit dem Begrenzungsglied (32) zusammenarbeitet, um eine Begrenzung zu erreichen.

11. Die Wasserweggleitschalteinrichtung nach Anspruch 10, **dadurch gekennzeichnet, dass**: das Ventilkörperglied ein Gehäuse und eine zweite Verbindung aufweist, der Schafthülsenteil in dem Gehäuse befestigt ist, die zweite Verbindung an einem zweiten Ende der Schafthülsenkomponente befestigt ist, und die zweite Verbindung mit einem zweiten Anschluss der Schafthülsenkomponente im Verbindung steht.

12. Die Wasserweggleitschalteinrichtung nach Anspruch 11, **dadurch gekennzeichnet, dass**: die Schafthülsenkomponente eine Schafthülse und eine Dichtungshülse aufweist, die Schafthülse und die Dichtungshülse in dem Gehäuse befestigt sind, die Schafthülse von der Dichtungshülse getrennt ist, Anschlüsse der Schafthülse und der Dichtungshülse, die zueinander hinweisen, die Einlässe der zwei Wasserteilungsdurchgänge definieren.

13. Die Wasserweggleitschalteinrichtung nach einem oder mehreren der Ansprüche 6 bis 10, die ferner ein Betriebsglied (5) aufweist, das konfiguriert ist, um sich relativ zum Ventilkörperglied (1) zu bewegen, das Ventilkörperglied (1) weist ein Gehäuse auf, die Schafthülsenkomponente ist im Gehäuse befestigt, die Schafthülsenkomponente weist ein erstes Durchgangsloch (181) auf, das eine Innenseite und eine Außenseite durchdringt, das Gehäuse weist ein zweites Durchgangsloch (161) auf, das eine Innenseite und eine Außenseite durchdringt, das Betriebsglied (5) ist in dem ersten Durchgangsloch (181) und dem zweiten Durchgangsloch (161) angeordnet und ist betriebsmäßig mit dem Gleitglied (2) verbunden, um das Gleitglied (2) zum Gleiten anzutreiben.

14. Die Wasserweggleitschalteinrichtung nach einem oder mehreren der Ansprüche 1 bis 13, **dadurch gekennzeichnet, dass**: das Ventilkörperglied (1) ein Gehäuse und eine Schafthülse (18) aufweist, die hermetisch in dem Gehäuse befestigt ist, die Schafthülse (18) mit dem Gehäuse zusammenarbeitet und mit einem Installationshohlraum (14) angeordnet ist, die Gleithülse (21) gleitbar mit einer Innenseite des Installationshohlraums (14) verbunden ist, ein Dichtungsglied (143) zwischen einer Innenwand des Installationshohlraums (14) und der Gleithülse (21) angeordnet ist, und das Dichtungsglied (143), das Wasserloch (212) und die Druckkomponente (3) in Abständen entlang einer Länge der Gleithülse (21) angeordnet sind.

15. Die Wasserweggleitschalteinrichtung nach Anspruch 11, **dadurch gekennzeichnet, dass**: die zweite Verbindung in dem Gehäuse befestigt ist, die zweite Verbindung mit dem Gehäuse in Verbindung steht, das Gehäuse mit einer Stufe angeordnet ist, die zu der zweiten Verbindung hinweist, der hervorstehende Teil ein Begrenzungsglied aufweist, die Druckkomponente einen hervorstehenden Teil aufweist, der aus der Gleithülse heraus hervorsteht, der Begrenzungsmechanismus eine Begrenzungsnut aufweist, die dadurch definiert ist, dass eine innere Endoberfläche der zweiten Verbindung von der Stufe des Gehäuses getrennt ist, das Begrenzungsglied in der Begrenzungsnut angeordnet ist, und die Begrenzungsnut mit dem Begrenzungsglied zusammenarbeitet, um eine Begrenzung zu erreichen.

16. Eine Wasserauslasseinrichtung, die einen Armaturkörper (6) und einen Steuermechanismus aufweist, ferner aufweisend die Wasserweggleitschalteinrichtung nach einem oder mehreren der Ansprüche 1 bis 15, wobei der Armaturkörper (6) mit einem vorderen Wasserweg angeordnet ist, der Steuermechanismus (61) mit dem vorderen Wasserweg zusammenarbeitet, um den Wasserweg zu steuern, und der vordere Wasserweg mit dem Wassereinlassdurchgang (11) der Wasserweggleitschalteinrichtung in Verbindung steht.

## Revendications

1. Dispositif de commutateur coulissant de voie d'eau comprenant un organe de corps de vanne (1) et un organe coulissant (2), l'organe de corps de vanne (1) est doté d'un passage d'entrée d'eau (11) et de deux passages de séparation d'eau (12, 12'), l'organe coulissant (2) est configuré pour coulisser par rapport à l'organe de corps de vanne (1) pour permettre aux deux passages de séparation d'eau (12, 12') d'être commutés pour être en communication avec le passage d'entrée d'eau (11) en raison du coulissement ; ledit dispositif de commutateur coulissant de voie d'eau comprenant en outre un élément de pression (3), l'élément de pression (3) est disposé dans l'organe de corps de vanne (1) et coopère avec les deux passages de séparation d'eau (12, 12') pour permettre à l'eau s'écoulant dans les deux passages de séparation d'eau (12, 12') d'être configurée pour agir sur l'élément de pression (3) pour permettre à l'élément de pression (3) d'être soumis à une force d'eau, l'organe coulissant (2) et l'élément de pression (3) sont configurés pour coulisser l'un par rapport à l'autre, et l'organe de corps de vanne (1) est doté d'un mécanisme de limitation (13) configuré pour limiter un mouvement ou une distance de mouvement de l'élément de pression (3), **caractérisé en ce que**,
l'organe coulissant (2) comprend un manchon coulissant (21) et une portion d'étanchéité (22) fixée à un côté extérieur du manchon coulissant (21), le manchon coulissant (21) entraîne la portion d'étanchéité (22) pour qu'elle coulisse pour permettre aux deux passages de séparation d'eau (12, 12') d'être commutés pour être en communication avec le passage d'entrée d'eau (11), le manchon coulissant (21) est relié hermétiquement et de manière coulissante à un côté extérieur de l'élément de pression (3) ; les deux passages de séparation d'eau (12, 12') sont un premier passage de séparation d'eau (12) et un deuxième passage de séparation d'eau (12'), le premier passage de séparation d'eau (12) comprend une portion intérieure de manchon (211) disposée dans le manchon coulissant (21), l'eau s'écoulant dans la portion intérieure de manchon (211) est configurée pour agir sur une première surface d'extrémité de l'élément de pression (3) pour générer la force d'eau, le deuxième passage de séparation d'eau (12') comprend une section d'interstice (141) disposée entre le manchon coulissant (21) et l'organe de corps de vanne (1) et une section de sortie d'eau (142) en communication avec la section d'interstice (141), l'eau s'écoulant dans la section de sortie d'eau (142) est configurée pour agir sur une deuxième surface d'extrémité de l'élément de pression (3) pour générer la force d'eau, et dans lequel
des entrées des deux passages de séparation d'eau (12, 12') sont distinctes et se font face l'une l'autre, le passage d'entrée d'eau (11) comprend une cavité de séparation d'eau (111) disposée dans l'organe de corps de vanne (1) et disposée entre les entrées des deux passages de séparation d'eau (12, 12'), le manchon coulissant (21) passe à travers la cavité de séparation d'eau (111), la portion d'étanchéité (22) est disposée dans la cavité de séparation d'eau (111), et les entrées des deux passages de séparation d'eau (12, 12') sont alternativement fermées pour parvenir à une commutation en raison de la portion d'étanchéité (22).

2. Dispositif de commutateur coulissant de voie d'eau selon la revendication 1, **caractérisé en ce que** : l'élément de pression (3) isole les deux passages de séparation d'eau (12, 12').

3. Dispositif de commutateur coulissant de voie d'eau selon la revendication 1 et/ou 2, **caractérisé en ce que** : un corps élastique de retour (4) est disposé entre l'organe coulissant (2) et l'organe de corps de vanne (1).

4. Dispositif de commutateur coulissant de voie d'eau selon la revendication 1, **caractérisé en ce que** : le manchon coulissant (21) comprend un trou d'eau (212) pénétrant dans un côté intérieur et un côté extérieur de la portion intérieure de manchon (211) du manchon coulissant (21), et la section de sortie d'eau (142) et la portion intérieure de manchon (211) sont respectivement disposées sur deux côtés de l'élément de pression (3).

5. Dispositif de commutateur coulissant de voie d'eau selon la revendication 4, **caractérisé en ce que** : une cavité d'installation (14) est disposée dans l'organe de corps de vanne (1), le manchon coulissant (21) est relié de manière coulissante à un côté intérieur de la cavité d'installation (14), un organe d'étanchéité (143) est disposé entre une paroi intérieure de la cavité d'installation (14) et le manchon coulissant (21), et l'organe d'étanchéité (143), le trou d'eau (212) et l'élément de pression (3) sont disposés à intervalles le long d'une longueur du manchon coulissant (21).

6. Dispositif de commutateur coulissant de voie d'eau selon la revendication 5, **caractérisé en ce que** : la section de sortie d'eau (142) est définie dans la cavité d'installation (14), et la section d'interstice (141) est définie entre la paroi intérieure de la cavité d'installation (14) et un élément de manchon d'arbre.

7. Dispositif de commutateur coulissant de voie d'eau selon une ou plusieurs des revendications 1 à 6, **caractérisé en ce que** : l'élément de pression (3) comprend une portion en saillie (31) faisant saillie hors du manchon coulissant (21) et disposée dans la section de sortie d'eau (142), le mécanisme de limitation (13) est disposé sur la section de sortie d'eau (142), et la portion en saillie (31) coopère avec le mécanisme de limitation (13) pour parvenir à une limitation.

8. Dispositif de commutateur coulissant de voie d'eau selon la revendication 7, **caractérisé en ce que** : la portion en saillie (31) est dotée d'un organe de limitation (32), le mécanisme de limitation (13) comprend une rainure de limitation (131) s'étendant vers l'intérieur à partir d'une paroi intérieure de la section de sortie d'eau (142), l'organe de limitation (32) est disposé dans la rainure de limitation (131), et la rainure de limitation (131) coopère avec l'organe de limitation (32) pour parvenir à la limitation.

9. Dispositif de commutateur coulissant de voie d'eau selon la revendication 1, **caractérisé en ce que** : une cavité d'installation (14) est disposée dans l'organe de corps de vanne (1), le manchon coulissant (21) est relié de manière coulissante à un côté intérieur de la cavité d'installation (14), la section de sortie d'eau (142) est définie dans la cavité d'installation (14), la section d'interstice (141) est définie entre la paroi intérieure de la cavité d'installation (14) et un élément de manchon d'arbre ; l'organe de corps de vanne (1) comprend une entrée d'eau pénétrant dans un côté intérieur et un côté extérieur, et l'entrée d'eau est en communication avec la cavité de séparation d'eau (111).

10. Dispositif de commutateur coulissant de voie d'eau selon une ou plusieurs des revendications 6 à 9, **caractérisé en ce que** : l'organe de corps de vanne (1) comprend l'élément de manchon d'arbre et un premier joint (15) fixé hermétiquement à une première extrémité de l'élément de manchon d'arbre, la cavité d'installation (14) est disposée dans l'élément de manchon d'arbre, le premier joint (15) est en communication avec un premier orifice de l'élément de manchon d'arbre, le premier joint (15) est doté d'un échelon faisant face à l'élément de manchon d'arbre ; la portion en saillie (31) comprend un organe de limitation (32), l'élément de pression (3) comprend une portion en saillie (31) faisant saillie hors du manchon coulissant (21), le mécanisme de limitation (13) comprend une rainure de limitation (131) définie en raison d'une première surface d'extrémité de l'élément de manchon d'arbre distincte de l'échelon du premier joint (15), l'organe de limitation (32) est disposé dans la rainure de limitation (131), et la rainure de limitation (131) coopère avec l'organe de limitation (32) pour parvenir à une limitation.

11. Dispositif de commutateur coulissant de voie d'eau selon la revendication 10, **caractérisé en ce que** : l'organe de corps de vanne comprend un logement et un deuxième joint, la portion de manchon d'arbre est fixée dans le logement, le deuxième joint est fixé à une deuxième extrémité de l'élément de manchon d'arbre, et le deuxième joint est en communication avec un deuxième orifice de l'élément de manchon d'arbre.

12. Dispositif de commutateur coulissant de voie d'eau selon la revendication 11, **caractérisé en ce que** : l'élément de manchon d'arbre comprend un manchon d'arbre et un manchon d'étanchéité, le manchon d'arbre et le manchon d'étanchéité sont fixés dans le logement, le manchon d'arbre est distinct du manchon d'étanchéité, des orifices du manchon d'arbre et du manchon d'étanchéité se faisant face l'un l'autre définissent les entrées des deux passages de séparation d'eau.

13. Dispositif de commutateur coulissant de voie d'eau selon une ou plusieurs des revendications 6 à 10, comprenant en outre un organe de fonctionnement (5) configuré pour bouger par rapport à l'organe de corps de vanne (1), l'organe de corps de vanne (1) comprend un logement, l'élément de manchon d'arbre est fixé dans le logement, l'élément de manchon d'arbre comprend un premier trou traversant (181) pénétrant dans un côté intérieur et un côté extérieur, le logement comprend un deuxième trou traversant (161) pénétrant dans un côté intérieur et un côté extérieur, l'organe de fonctionnement (5) est disposé dans le premier trou traversant (181) et le deuxième trou traversant (161) et est relié fonctionnellement à l'organe coulissant (2) pour entraîner l'organe coulissant (2) pour qu'il coulisse.

14. Dispositif de commutateur coulissant de voie d'eau selon une ou plusieurs des revendications 1 à 13, **caractérisé en ce que** : l'organe de corps de vanne (1) comprend un logement et un manchon d'arbre (18) fixé hermétiquement dans le logement, le manchon d'arbre (18) coopère avec le logement et est doté d'une cavité d'installation (14), le manchon coulissant (21) est relié de manière coulissante à un côté intérieur de la cavité d'installation (14), un organe d'étanchéité (143) est disposé entre une paroi intérieure de la cavité d'installation (14) et le manchon coulissant (21), et l'organe d'étanchéité (143), le trou d'eau (212) et l'élément de pression (3) sont disposés à intervalles le long d'une longueur du manchon coulissant (21).

15. Dispositif de commutateur coulissant de voie d'eau selon la revendication 11, **caractérisé en ce que** : le deuxième joint est fixé dans le logement, le deuxième joint est en communication avec le logement, le logement est doté d'un échelon faisant face au deuxième joint ; la portion en saillie comprend un organe de limitation, l'élément de pression comprend une portion en saillie faisant saillie hors du manchon coulissant, le mécanisme de limitation comprend une rainure de limitation définie en raison d'une surface d'extrémité intérieure du deuxième joint distincte de l'échelon du logement, l'organe de limitation est disposé dans la rainure de limitation, et la rainure de limitation coopère avec l'organe de limitation pour parvenir à une limitation.

16. Dispositif de sortie d'eau comprenant un corps de robinet (6) et un mécanisme de commande, comprenant en outre le dispositif de commutateur coulissant de voie d'eau selon une ou plusieurs des revendications 1 à 15, le corps de robinet (6) est doté d'une voie d'eau avant, le mécanisme de commande (61) coopère avec la voie d'eau avant pour commander une voie d'eau, et la voie d'eau avant est en communication avec le passage d'entrée d'eau (11) du dispositif de commutateur coulissant de voie d'eau.
